# EUROPEAN PATENT SPECIFICATION

(11) **EP 4 223 583 B1**
(45) Date of publication and mention of the grant of the patent: **15.01.2025**
(21) Application number: 22211782.2
(22) Date of filing: 06.12.2022
(51) Int. Cl.: B60L 53/30, B60L 53/63, B60L 53/64, B60L 53/65, B60L 53/66, B60L 53/67, B60L 53/68, B60L 55/00

(54) **SERVER, VEHICLE, AND COMMUNICATION CONTROL METHOD**
SERVER, FAHRZEUG UND KOMMUNIKATIONSSTEUERUNGSVERFAHREN
SERVEUR, VÉHICULE ET PROCÉDÉ DE COMMANDE DE COMMUNICATION

(30) Priority: 08.02.2022 JP 2022017764
(43) Date of publication of application: 09.08.2023
(73) Proprietor: TOYOTA JIDOSHA KABUSHIKI KAISHA, Aichi-Ken 471-8571 (JP)
(72) Inventor: MORISHIMA, Akinori, Toyota-shi, 471-8571 (JP)
(74) Representative: D Young & Co LLP

(56) References cited:
- US-A1- 2015 039 391
- US-A1- 2015 178 034
- US-A1- 2021 018 331

## Description

### BACKGROUND OF THE INVENTION

### 1. Field of the Invention

The present disclosure relates to servers, vehicles, and communication control methods, and more particularly to a communication control technique for managing vehicles.

### 2. Description of Related Art

Japanese Unexamined Patent Application Publication No. 2021-87261 (JP 2021-87261 A) discloses a management device that manages a plurality of pieces of consumer equipment for demand response. The management device includes a storage unit and a calculation unit. The storage unit stores actual power demand data of the pieces of consumer equipment. The calculation unit calculates the available balancing capacity in at least one demand response scenario, based on the actual power demand data. A management system for electric vehicles and corresponding charging stations is disclosed in US 2015/039391 A1 (Hershkovitz Barak et al).

### SUMMARY OF THE INVENTION

Vehicles such as battery electric vehicles (BEVs), plug-in hybrid electric vehicles (PHEVs), and fuel cell electric vehicles (FCEVs) are configured to be charged from and discharged to a power grid when electrically connected to the power grid. A technique of connecting these vehicles to a power grid to make them function as a virtual power plant (VPP) has been proposed (see, for example, JP 2021-87261 A). According to this technique, power can be supplied from the vehicles to the power grid when the power grid is short of power, and power can be supplied from the power grid to the vehicles when the power grid has surplus power.

One possible way to use this technique is to manage a plurality of vehicles by a server. The server acquires data including location information from those vehicles that are not connected to the power grid out of the plurality of vehicles. The server predicts, for each vehicle, the time when the vehicle becomes connectable to the power grid (connection time), based on the acquired data. An appropriate plan to make each vehicle function as a VPP can be developed by accurately predicting the connection time of each vehicle to the power grid.

The server acquires data from the vehicles through communication, but this can cause excessive data traffic. This problem can be particularly significant when the server manages a very large number of vehicles. Excessive data traffic can increase various communication costs.

The present disclosure provides a server that manages a plurality of vehicles, a vehicle, and a communication control method for managing a plurality of vehicles.
(1) A server according to an aspect of the present disclosure manages a plurality of vehicles. The server includes: a communication device that acquires data including location information of a target vehicle through communication, the target vehicle being a vehicle not connected to a power grid out of the vehicles; and a processor that sets a frequency of communication at which the data is acquired from the target vehicle. Each of the vehicles is configured to perform either or both of charging and discharging from and to the power grid when electrically connected to the power grid. The processor acquires the data from the target vehicle. The processor predicts connection time from the acquired data according to a prediction model and calculates confidence of the predicted connection time, the connection time being time when the target vehicle becomes connectable to the power grid, and the prediction model being a model that predicts the connection time based on the data from the target vehicle. The processor sets the frequency of communication according to the confidence.
(2) The processor switches the frequency of communication according to the confidence until the target vehicle is connected to the power grid.
(3) The prediction model may be a probability model that probabilistically predicts the connection time based on a learning result of a driving history of the target vehicle. The processor may calculate the confidence to be lower as a width of a probability distribution of the connection time predicted using the prediction model is greater.
   In the above configurations of (1) to (3), the processor calculates the confidence of the connection time when the target vehicle becomes connectable to the power grid. The confidence is calculated according to, for example, the width of the probability distribution of the connection time. The processor sets the frequency of communication according to the confidence. For example, the processor can set the frequency of communication to a lower value as the confidence is higher. This is because when the confidence of the connection time is high, the connection time can be accurately predicted without acquiring the data frequently. Therefore, according to the configurations of (1) to (3), communication costs can be reduced.
(4) The processor may set the frequency of communication to a lower value as the confidence is higher.
   According to the above configuration, when the confidence of the connection time is high, the connection time can be accurately predicted without acquiring the data frequently. Therefore, the frequency of communication is set to a low value when the confidence of the connection time is high, so that the communication costs can be reduced.
(5) The processor may set the frequency of communication to a lower value when the confidence is lower than a first predetermined value than when the confidence is higher than the first predetermined value.
   According to the above configuration, it is difficult to predict the connection time with higher accuracy when the confidence is lower than the first predetermined value than when the confidence is higher than the first predetermined value. Therefore, the frequency of communication is set to a low value when the confidence is lower than the first predetermined value, so that the communication costs can be reduced.
(6) The processor may set the frequency of communication to a same value as when the confidence is equal to a first predetermined value, when the confidence is lower than the first predetermined value.
   According to the above configuration, it is difficult to predict the connection time with higher accuracy when the confidence is lower than the first predetermined value than when the confidence is higher than the first predetermined value. Therefore, the frequency of communication is set to the same value, so that the communication costs can be reduced.
(7) The processor may set the frequency of communication to a lower value when the confidence is higher than a second predetermined value that is higher than the first predetermined value than when the confidence is lower than the second predetermined value.
   According to the above configuration, the frequency of communication is set to a low value when the confidence is higher than the second predetermined value that is higher than the first predetermined value, so that the communication costs can be reduced.
(8) The data may include at least one of the following in addition to the location information: day of week, weather information, and traffic congestion information.
   According to the above configuration, the prediction accuracy of the connection time can be improved.
(9) A vehicle according to another aspect of the present disclosure is configured to perform either or both of charging and discharging from and to a power grid when electrically connected to the power grid. The vehicle includes: a communication device that transmits data including location information of the vehicle to the above server; and a control device that controls the communication device. The control device acquires confidence of connection time when the vehicle is not connected to the power grid, the connection time being time when the vehicle is predicted to become connectable to the power grid. The control device sets a frequency of communication at which the data is transmitted to the server, according to the confidence.
(10) A communication control method according to still another aspect of the present disclosure is a method for controlling communication between a plurality of vehicles (as described above) and the above server. The communication control method includes: acquiring data from a target vehicle by the server; predicting the connection time from the data according to a prediction model and calculating confidence of the predicted connection time by the server; and setting by the server a frequency of communication at which the data is acquired, according to the confidence. Each of the vehicles is configured to perform either or both of charging and discharging from and to a power grid when electrically connected to the power grid. The server includes a prediction model, the prediction model being a model that predicts the connection time based on data including location information of the target vehicle of the vehicles when the target vehicle is not connected to the power grid, and the connection time being time when the target vehicle become connectable to the power grid.

According to the configuration of (9) or the method of (10), the communication costs can be reduced as in the configuration of (1).

According to the present disclosure, the communication costs for the server to manage the vehicles can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically shows an overall configuration of a vehicle management system according to an embodiment of the present disclosure;
FIG. 2 shows in more detail the configurations of a vehicle and a vehicle management server;
FIG. 3 is a functional block diagram illustrating a part of functions of the vehicle management server;
FIG. 4 is a graph of a probability distribution of the arrival time prediction results obtained using a time prediction model 5;
FIG. 5 illustrates the level of the confidence;
FIG. 6 shows a specific example of data that is handled by the vehicle management server;
FIG. 7 is a first diagram illustrating a method for determining the frequency of communication according to the level of the confidence;
FIG. 8 is a second diagram illustrating a method for determining the frequency of communication according to the level of the confidence;
FIG. 9 is a graph showing a first example of the relationship between the confidence and the frequency of communication;
FIG. 10 is a graph showing a second example of the relationship between the confidence and the frequency of communication;
FIG. 11 is a graph showing a third example of the relationship between the confidence and the frequency of communication;
FIG. 12 is a flowchart of a process that is performed in the vehicle management system according to the embodiment; and
FIG. 13 is a flowchart of a process that is performed in the vehicle management system according to a modification of the embodiment.

### DETAILED DESCRIPTION OF EMBODIMENTS

Hereinafter, an embodiment of the present disclosure will be described in detail with reference to the drawings. The same or corresponding portions are denoted by the same signs throughout the drawings, and description thereof will not be repeated.

In the following embodiment, a configuration in which vehicles are made to function as a VPP will be described by way of example. However, it is not essential to implement a VPP. Charging/discharging may be performed between the vehicles and a power grid regardless of the power supply and demand balance of the power grid. In the present disclosure, "charging/discharging" means either or both of charging and discharging. Charging/discharging may refer to only charging or only discharging.

### Embodiment

### System Configuration

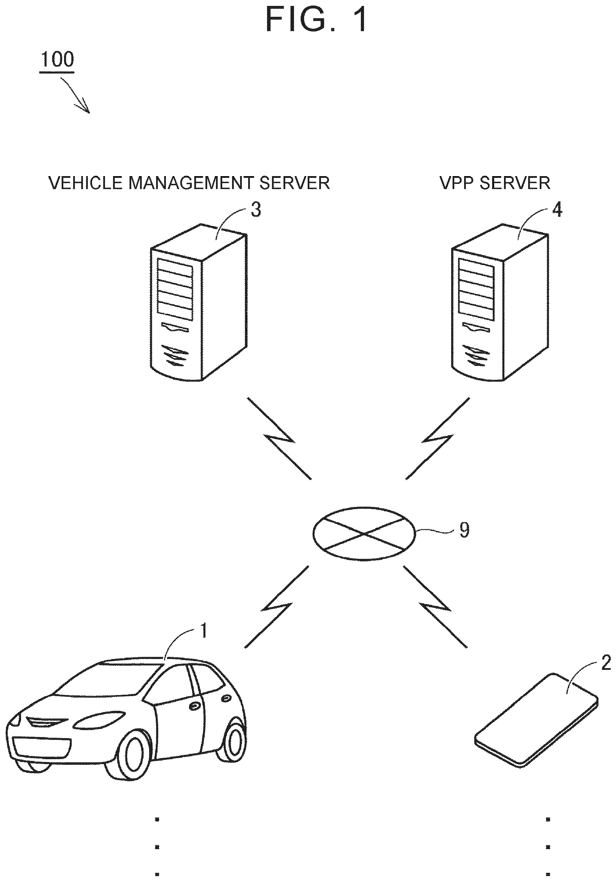

FIG. 1 schematically shows an overall configuration of a vehicle management system according to an embodiment of the present disclosure. A vehicle management system 100 includes a plurality of vehicles 1, a plurality of user terminals 2, a vehicle management server 3, and a virtual power plant (VPP) server 4. The vehicles 1, the user terminals 2, the vehicle management server 3, and the VPP server 4 are connected via a network 9 such as the Internet so that they can communicate bidirectionally.

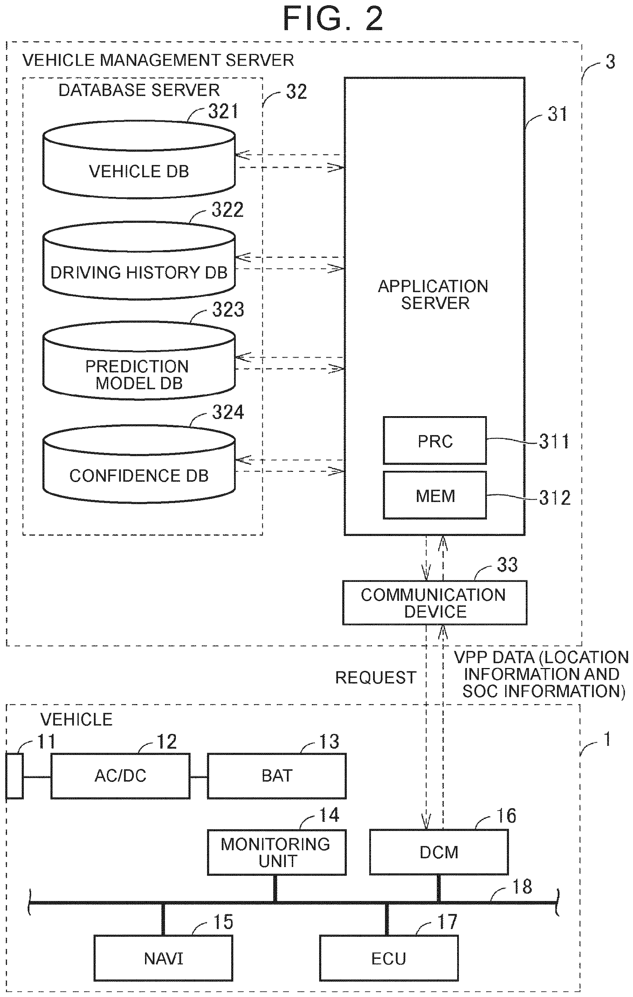

Each of the vehicles 1 is a vehicle equipped with a driving battery 13 (see FIG. 2). More specifically, each vehicle 1 is, for example, a battery electric vehicle, a plug-in hybrid electric vehicle, or a fuel cell electric vehicle. A detailed configuration of the vehicle 1 will be described with reference to FIG. 2.

Each of the user terminals 2 is an information terminal carried by the user of a corresponding one of the vehicles 1. The user terminal 2 is, for example, a smartphone, a tablet, or a personal computer (PC). The user terminal 2 is used to manage the user's schedule. The user terminal 2 also includes a Global Positioning System (GPS) receiver, not shown, and is configured to identify the location of the user terminal 2.

The vehicle management server 3 is a server that manages the vehicles 1. The vehicle management server 3 predicts, for each vehicle 1, the arrival time of the vehicle 1 at a destination point. The vehicle management server 3 also predicts, for each vehicle 1, the state of charge (SOC) of the battery 13 at the arrival time at the destination point. The vehicle management server 3 transmits the predicted arrival time and the predicted SOC at the arrival time to the VPP server 4. A detailed configuration of the vehicle management server 3 will be described with reference to FIG. 2. The vehicle management server 3 corresponds to the "server" according to the present disclosure.

The VPP server 4 develops a plan to use various distributed energy resources (DERs), not shown, as a VPP. More specifically, the VPP server 4 sets the time of day to use each DER as a VPP, and calculates the electric energy for charging/discharging each DER.

DERs are relatively small-scale power equipment capable of supplying and receiving to and from a power grid. DERs include, for example, power generation DERs and power storage DERs. The power generation DERs may include variable renewable energy and generators. The variable renewable energy refers to power generation equipment whose power output fluctuates depending on weather conditions. The variable renewable energy include, for example, solar power generation equipment and wind power generation equipment. On the other hand, the generators refer to power generation equipment that does not depend on the weather conditions. The generators include, for example, a steam turbine generator, a gas turbine generator, a diesel engine generator, a gas engine generator, a biomass generator, a stationary fuel cell, and a cogeneration system. The power storage DERs may include a power storage system and a heat storage system. The power storage system is a stationary power storage device that stores power generated by the variable renewable energy etc. However, the power storage system may be a power-to-gas device that produces gaseous fuel (hydrogen, methane, etc.) using electric power. The heat storage system includes a heat storage tank that stores a liquid medium warmed by a heat source while keeping the liquid medium warm.

The VPP server 4 develops a plan to use the vehicles 1 as a VPP, in addition to the DERs. That is, for each vehicle 1, the VPP server 4 sets the time of day to use the vehicle 1 as a VPP and calculates the electric energy for charging/discharging the vehicle 1, based on the information from the vehicle management server 3 (the arrival time of the vehicle 1 at the destination point and the SOC at the arrival time).

FIG. 2 shows in more detail the configurations of the vehicle 1 and the vehicle management server 3. The vehicle 1 is configured to receive and supply power from and to (be charged/discharged from/to) the power grid via a charging cable (not shown). The vehicle 1 includes an inlet 11, a power converter 12, a battery 13, a monitoring unit 14, a navigation system 15, a communication module 16, and an electronic control unit (ECU) 17. The monitoring unit 14, the navigation system 15, the communication module 16, and the ECU 17 are connected by an in-vehicle network 18 such as a Controller Area Network (CAN) so that they can communicate with each other.

The inlet 11 is configured to be connected to a charging cable (not shown) extending from charging equipment such as Electric Vehicle Service Equipment (EVSE). Although not shown in the figure, the charging equipment is electrically connected to the power grid. The charging equipment as used herein is also configured so that the vehicle 1 can be discharged to the charging equipment.

The power converter 12 is electrically connected between the inlet 11 and the battery 13. The power converter 12 includes, for example, an alternating current-to-direct current (AC-to-DC) converter (inverter). The power converter 12 converts AC power supplied from the charging equipment via the inlet 11 to DC power, and supplies the DC power to the battery 13. The power converter 12 also converts DC power stored in the battery 13 to AC power, and supplies the AC power to the charging equipment via the inlet 11.

The battery 13 is an assembled battery including a plurality of cells. Each cell is a secondary cell such as a lithium-ion cell or a nickel metal hydride cell. The battery 13 stores power for generating the driving force for the vehicle 1. The battery 13 is charged with power generated by a motor generator (not shown) or power supplied from the charging equipment. The battery 13 can also discharge the stored power to the charging equipment.

The monitoring unit 14 includes a voltage sensor and a current sensor (both not shown). The voltage sensor detects the voltage of the battery 13 and outputs the detection result to the ECU 17. The current sensor detects the current flowing through the battery 13 and outputs the detection result to the ECU 17. The ECU 17 can calculate the SOC of the battery 13 based on the detection results from the voltage sensor and the current sensor.

The navigation system 15 includes a GPS receiver, not shown. The GPS receiver identifies the location of the vehicle 1 based on radio waves from artificial satellites (not shown). The navigation system 15 records a travel route of the vehicle 1 or find a travel route according to the location of the vehicle 1 identified by the GPS receiver.

The communication module 16 is an in-vehicle Data Communication Module (DCM) and is configured to allow the ECU 17 and the vehicle management server 3 to bidirectionally communicate with each other. Hereinafter, information indicating the location of the vehicle 1 is sometimes referred to as the "location information." The location information associates the location of the vehicle 1 with time. Information indicating the SOC of the battery 13 is hereinafter sometimes referred to as the "SOC information." The location information and the SOC information are hereinafter sometimes collectively referred to as the "VPP data." The communication module 16 transmits the VPP data to the vehicle management server 3. The location information need not necessarily be transmitted from the vehicle 1 to the vehicle management server 3, and may be transmitted from the user terminal 2 to the vehicle management server 3.

The ECU 17 includes a processor such as a central processing unit (CPU), and a memory such as a read-only memory (ROM) and a random access memory (RAM). The ECU 17 controls each device in the vehicle 1 so that the vehicle 1 is in a desired state, based on detected values from a sensor group (not shown) and programs stored in the memory. The ECU 17 also generates various kinds of data to be transmitted to the vehicle management server 3.

The vehicle management server 3 includes an application server 31, a database server 32, and a communication device 33. The application server 31 includes a processor 311 and a memory 312. The processor 311 is, for example, a CPU. The processor 311 is configured to perform predetermined arithmetic operations described in a program. The memory 312 includes, for example, a ROM and a RAM. The memory 312 stores programs that are executed by the processor 311. The memory 312 also temporarily stores data generated by the processor 311 executing the program, and data received from the vehicle 1 and/or the user terminal 2 (see FIG. 1) via the communication device 33.

The application server 31 collects the VPP data (location information and SOC information) from each of the vehicles 1. More specifically, in the present embodiment, the application server 31 requests the VPP data from each vehicle 1. Each vehicle 1 transmits the VPP data to the application server 31 in response to the request from the application server 31.

When the vehicle 1 is traveling, the application server 31 can predict the arrival time at the destination point where the vehicle 1 can function as a VPP (typically the arrival time at home), based on the location information. The destination point of the vehicle 1 can be set in advance by, for example, the user. In this example, the destination point of the vehicle 1 is the user's home where the charging equipment is installed. After the user gets home, the user connects the vehicle 1 to the charging equipment (power grid) via the charging cable. This allows the vehicle 1 to function as a VPP. Therefore, in the case where the destination point of the vehicle 1 is a place where the vehicle 1 is connectable to the power grid, the arrival time of the vehicle 1 at the destination point is the time when the vehicle 1 becomes connectable to the power grid ("connection time" according to the present disclosure). The application server 31 can also predict the electric energy the vehicle 1 functioning as a VPP can receive or supply from or to the power grid after the user gets home, based on the SOC information (SOC at the arrival time at the destination point).

The database server 32 includes a vehicle database (DB) 321, a driving history database (DB) 322, a time prediction model database (DB) 323, and a confidence database (DB) 324.

The vehicle database 321 stores the SOC information collected from each vehicle 1. The vehicle database 321 also stores information on the vehicle type, year, model, and specifications (such as fuel economy and/or electricity economy) of each vehicle 1.

The driving history database 322 stores the location information collected from each vehicle 1 as a driving history of the vehicle 1. The driving history database 322 stores the days of the week (including whether they are a weekday or a holiday) when the vehicle 1 was driven, and also stores weather information (weather, temperature, precipitation, wind speed, etc.) of the area where the vehicle 1 was driven during traveling of the vehicle 1. The driving history database 322 also stores map information (including traffic congestion information).

The time prediction model database 323 stores time prediction models prepared for each vehicle 1. The time prediction model is used to predict the arrival time of the vehicle 1 at the destination point based on the learning results of the movement pattern of the user of the vehicle 1.

The confidence database 324 stores data for calculating the confidence of the arrival time predicted using the time prediction model (probability distribution of the arrival time that will be described later). The time prediction model and the confidence will be described later in detail.

Not all of the above databases have to be included in the database server 32. That is, a part or all of the databases may be included in a server other than the vehicle management server 3 (e.g., a cloud server).

### Reduction of Communication Costs

A very large number of vehicles 1 can be under management of the vehicle management server 3. Especially in such a case, data traffic required for the application server 31 to collect the VPP data (location information and SOC information) from the vehicles 1 may become excessive. This may increase various communication costs such as data communication fees for the vehicles 1 and/or the vehicle management server 3, costs for increasing the data processing capability of the application server 31, and costs for increasing the communication performance of the communication device 33.

Therefore, the present embodiment uses a configuration in which the "frequency of communication" of the VPP data from the vehicle 1 to the application server 31 is variably set. Specifically, the application server 31 sets the frequency of communication of the VPP data for each vehicle 1. The frequency of communication is also variably set temporally. For example, when the frequency of communication in a first time period is set to once every 10 minutes for a certain vehicle, the application server 31 requests the VPP data from this vehicle every 10 minutes in the first time period. When the frequency of communication in a second time period is set to once every 20 minutes for this vehicle, the application server 31 requests the VPP data from this vehicle every 20 minutes in the second time period. This vehicle transmits the VPP data to the application server 31 in response to a request from the application server 31.

The frequency of communication of the VPP data from the vehicle 1 to the application server 31 can be thus be switched temporally. The frequency of communication of the VPP data can also be set differently for each vehicle. As will be described below, the communication costs for the vehicle management server 3 to manage the vehicles 1 can be reduced by determining, for each vehicle 1, an appropriate frequency of communication according to the user's movement history (driving history of the vehicle 1).

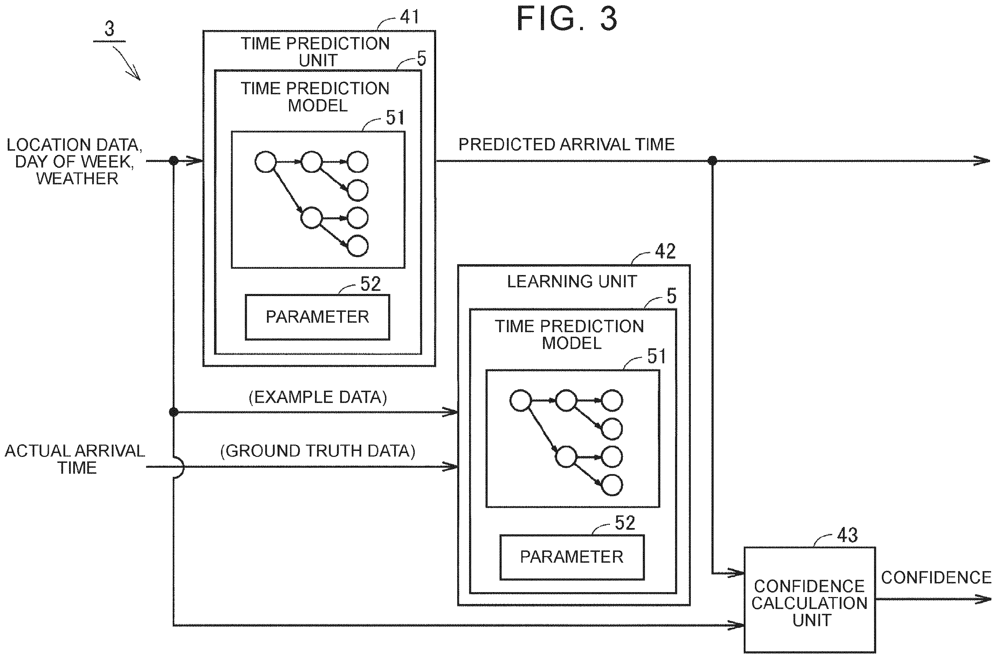

FIG. 3 is a functional block diagram illustrating a part of functions of the vehicle management server 3. The vehicle management server 3 includes a time prediction unit 41, a learning unit 42, and a confidence calculation unit 43.

The time prediction unit 41 predicts the arrival time of the vehicle 1 at the destination point. More specifically, the time prediction unit 41 includes a time prediction model 5 prepared by, for example, machine learning. The time prediction model 5 includes a probability model 51 and a parameter 52. The probability model 51 is a model that expresses dependencies between or among a plurality of events by probabilities (conditional transition probabilities), and is, for example, a Bayesian network or an nth-order Markov chain model. The parameter 52 includes a weighting factor etc. used for machine learning of the probability model 51.

The time prediction unit 41 receives as an input the prediction conditions such as the location information of the vehicle 1 included in the VPP data (information in which the location of the departure point and/or the travel route is associated with the time), the day of the week, and the weather from the vehicle 1. The time prediction unit 41 may receive the user's schedule (e.g., information indicating points to be visited on the way to the destination point) managed using the user terminal 2 (see FIG. 2). The time prediction unit 41 calculates the time when the vehicle 1 is predicted to arrive at the destination point (predicted arrival time) using the learned (in this example, the learning unit 42 performs additional learning) time prediction model 5. The calculated predicted arrival time is output to the confidence calculation unit 43 and the outside (VPP server 4).

The time prediction unit 41 calculates the predicted arrival time every time it receives the prediction conditions from the vehicle 1. That is, the predicted arrival time is updated every time the prediction conditions are received (every time the VPP data is collected). The prediction accuracy of the arrival time can thus be improved as the vehicle 1 approaches the destination point.

The learning unit 42 learns the time prediction model 5 using example data and ground truth data. The example data includes, for example, the location information of the vehicle 1, the day of the week, and the weather. The ground truth data is the time when the vehicle 1 actually arrived at the destination point (actual arrival time). The learning unit 42 adjusts, for each piece of example data, the parameter 52 (e.g., the weighting factor) so that the predicted arrival time approaches the actual arrival time (ground truth data). As described above, the vehicle management server 3 is configured to update the learned time prediction model 5 by additional learning.

The confidence calculation unit 43 calculates, for each set of prediction conditions including the location information of the vehicle 1, the day of the week, and the weather, the confidence of the arrival time predicted using the time prediction model 5. The confidence is used to set the frequency of communication of the VPP data.

### Confidence

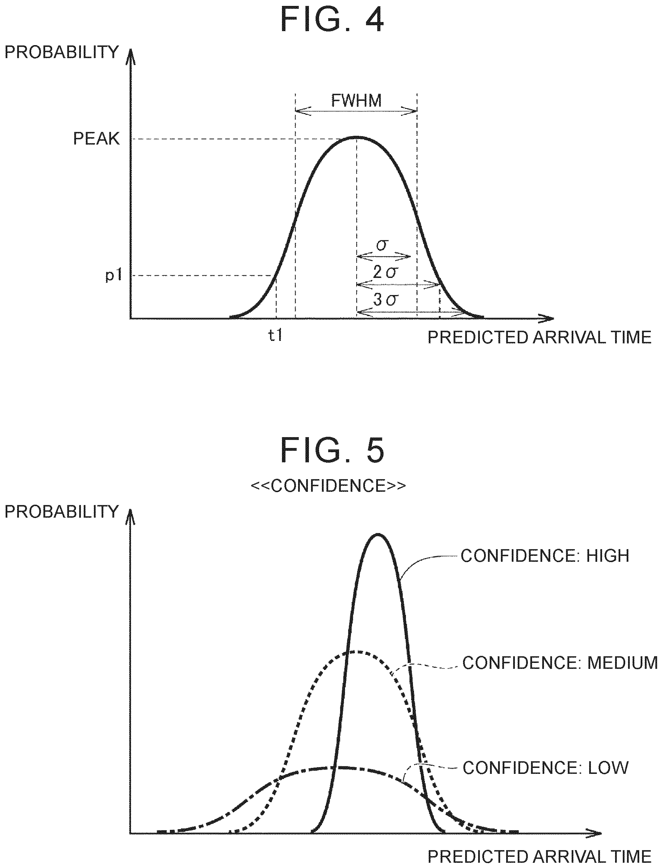

A method for calculating the confidence will be described with reference to FIGS. 4 and 5. As described above, the time prediction model 5 is a model that probabilistically expresses the predicted arrival time at the destination point. Therefore, the prediction results obtained using the time prediction model 5 are represented by a probability distribution.

FIG. 4 is a graph of a probability distribution of the arrival time prediction results (predicted arrival time) obtained using the time prediction model 5. The abscissa represents the predicted arrival time obtained using the time prediction model 5. The ordinate represents the probability for each time. For example, the probability that the vehicle 1 will arrive at the destination point at time t1 is predicted to be p1 by using the time prediction model 5.

The confidence is an index of the spread (width) of the probability distribution of the predicted arrival time. The confidence may be, for example, the standard deviation σ of the probability distribution. The confidence may be 2σ or 3σ. The confidence may be the full width at half maximum (FWHM) of the probability distribution.

FIG. 5 illustrates the level of the confidence. The probability distribution of the predicted arrival time can have various widths. However, the sum of the probabilities of each time (integrated area of the probability distribution) is the same (100%) regardless of the width of the probability distribution. Therefore, the narrower the width of the probability distribution, the higher the height of the probability distribution. Accordingly, the confidence may be the height (peak) of the probability distribution. As shown in FIG. 5, the narrower the width of the probability distribution, that is, the higher the peak of the probability distribution, the higher the confidence. An example in which the confidence is the standard deviation σ of the probability distribution will be described below.

### Confidence and Frequency of Communication

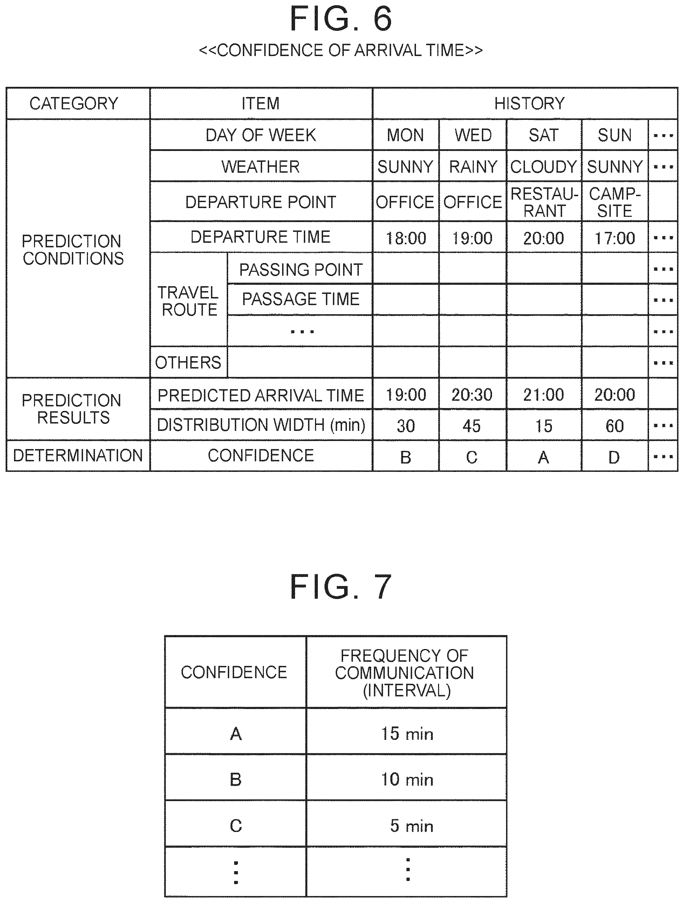

FIG. 6 shows a specific example of data that is handled by the vehicle management server 3. In the example shown in FIG. 6, the arrival time (median of the probability distribution) is predicted to be 19:00 when, for example, it is Monday and sunny, the departure point is the user's office, and the departure time is 18:00. At this time, the width of the probability distribution of the predicted arrival time is predicted to be 30 minutes. The confidence is calculated according to the width of the probability distribution.

In this example, the confidence is divided into levels using symbols. Level A has the narrowest width of the probability distribution (e.g., 15 minutes or less) and indicates the highest confidence. Level B has the second narrowest width of the probability distribution (e.g., 30 minutes or less) and indicates the second highest confidence. The same applies to the subsequent levels C, D, etc. In the present embodiment, the frequency of communication of the VPP data (location information and SOC information) from the vehicle 1 to the vehicle management server 3 is set according to the level of the confidence.

FIG. 7 is a first diagram illustrating a method for determining the frequency of communication according to the level of the confidence. The frequency of communication means, for example, the time interval between one data transmission and a subsequent data transmission. In this example, when the level of the confidence is A, the frequency of communication (time interval) is set to 15 minutes. When the level of the confidence is B, the frequency of communication is set to 10 minutes. When the level of the confidence is C, the frequency of communication is set to five minutes. The shorter the time interval, the higher the frequency of communication.

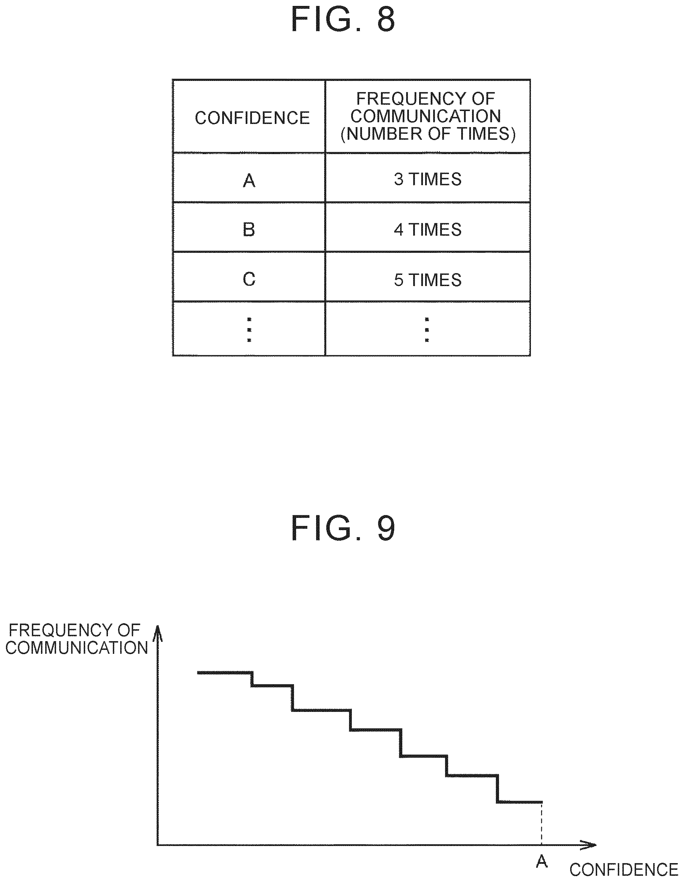

FIG. 8 is a second diagram illustrating a method for determining the frequency of communication according to the level of the confidence. The frequency of communication may be the number of data transmissions that are performed while the vehicle 1 travels from the departure point to the destination point. When the level of the confidence is A, the frequency of communication (number of data transmissions) is set to three times. When the level of the confidence is B, the frequency of communication is set to four times. When the level of the confidence is C, the frequency of communication is set to five times. The larger the number of data transmissions, the higher the frequency of communication.

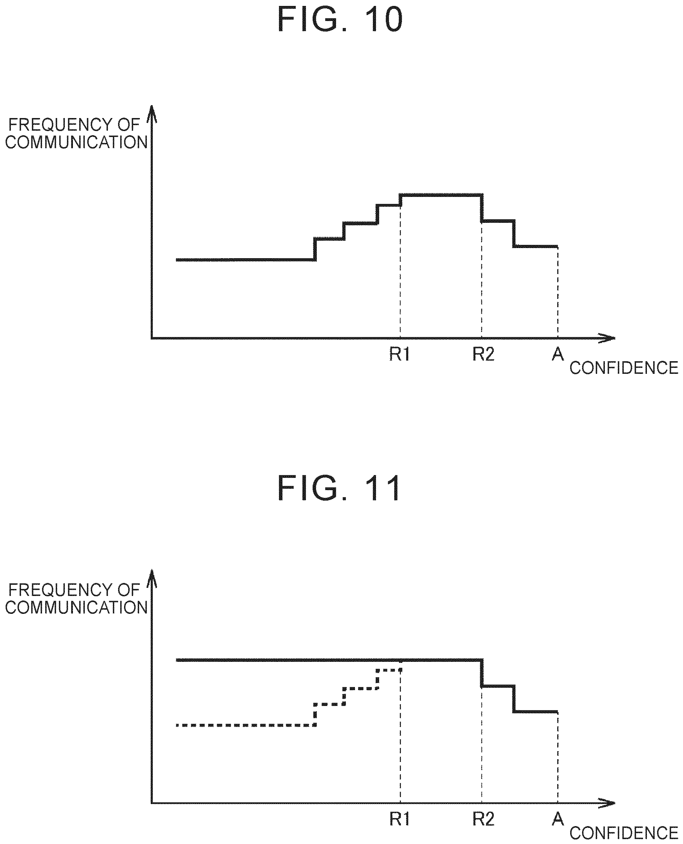

FIG. 9 is a graph showing a first example of the relationship between the confidence and the frequency of communication. The abscissa represents the confidence. The ordinate represents the frequency of communication. The same applies to FIGS. 10 and 11 that will be described later.

As shown in FIG. 9, the vehicle management server 3 can set the frequency of communication to a lower value as the confidence is higher. That is, the vehicle management server 3 can determine the frequency of communication in such a manner that the higher the confidence, the longer the time interval between two consecutive data transmissions or the smaller the number of data transmissions performed from the departure point to the destination point.

When the confidence is low, the width of the probability distribution of the predicted arrival time is great. This means that the predicted arrival time varies greatly. The predicted arrival time may therefore deviate greatly from the actual arrival time. Accordingly, it is desirable to set the frequency of communication to a high value when the confidence is low. As described above, the vehicle management server 3 collects the VPP data from the vehicle 1 at the frequency of communication set according to the confidence, and updates the predicted arrival time every time the vehicle management server 3 collects the VPP data from the vehicle 1. Since the predicted arrival time is updated based on the latest VPP data, the prediction accuracy of the arrival time can be improved.

On the other hand, when the confidence is high, the width of the probability distribution of the predicted arrival time is narrow, and the predicted arrival time does not vary so much. It can therefore be said that the predicted arrival time is less likely to deviate greatly from the actual arrival time. Accordingly, the frequency of communication can be set to a low value when the confidence is high. The communication costs can thus be reduced without excessively reducing the prediction accuracy of the arrival time.

FIG. 9 shows an example in which the frequency of communication changes stepwise (in steps) according to the confidence. However, the frequency of communication may change linearly or curvilinearly according to the confidence.

FIG. 10 is a graph showing a second example of the relationship between the confidence and the frequency of communication. As shown in FIG. 10, the vehicle management server 3 may set the frequency of communication in such a manner that the lower the confidence, the lower the frequency of communication when the confidence is lower than R1, and that the higher the confidence, the lower the frequency of communication when the confidence is higher than R2. R2 has a higher value than R1.

The reason why the frequency of communication is set to a lower value as the confidence increases when the confidence is higher than R2 is similar to the reason described with reference to FIG. 9. That is, when the confidence is high, the predicted arrival time is less likely to deviate greatly from the actual arrival time. Therefore, the frequency of communication is set to a low value to reduce the communication costs.

The reason why the frequency of communication is set to a lower value as the confidence decreases when the confidence is lower than R1 will be described below. When the confidence is low, the predicted arrival time varies greatly and may greatly deviate from the actual arrival time. Even when the predicted arrival time is updated based on the latest VPP data, the confidence based on the new VPP data may not increase significantly, and as a result, the prediction accuracy of the arrival time may remain low. Therefore, when the confidence is low, the frequency of communication need not necessarily be increased, and the communication costs can be reduced by reducing the frequency of communication. It can also be said that, when the confidence is low, priority is given to reducing the communication costs over improving the prediction accuracy of the arrival time.

FIG. 11 is a graph showing a third example of the relationship between the confidence and the frequency of communication. FIG. 10 shows an example in which when the confidence is lower than R1, the frequency of communication is set to be lower as the confidence decreases (see dashed line in FIG. 11). However, as shown in FIG. 11, the frequency of communication may be constant when the confidence is lower than R1. In this case, when the confidence is higher than R2, the communication costs can be reduced as in FIG. 10. On the other hand, when the confidence is lower than R1, a certain level of prediction accuracy of the arrival time can be obtained without increasing the communication costs, unlike the case of FIG. 10.

### Process Flow

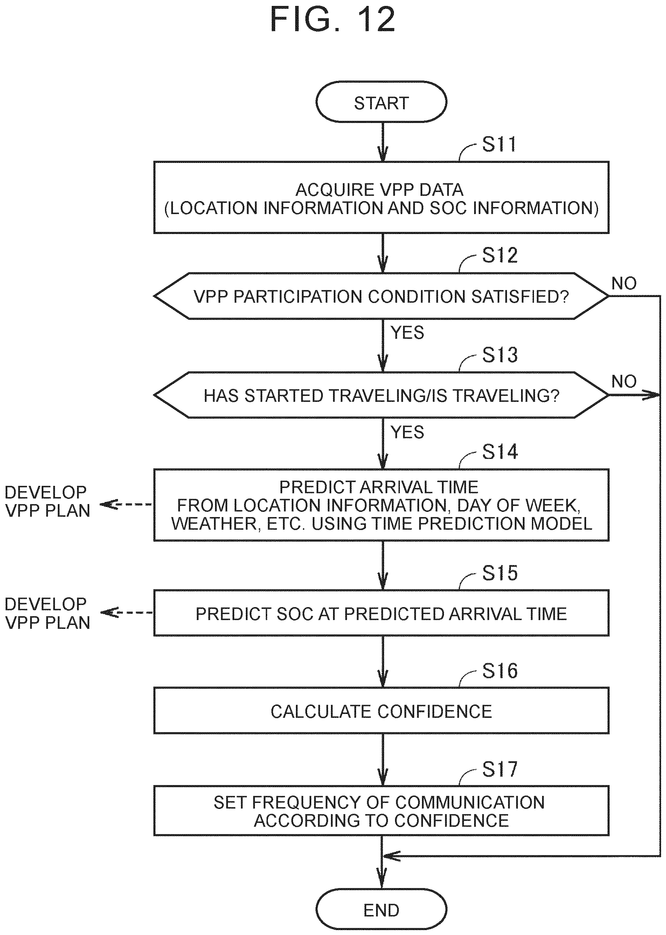

FIG. 12 is a flowchart of a process that is performed in the vehicle management system 100 according to the present embodiment. The process shown in this flowchart is performed when a predetermined condition is satisfied (e.g., every predetermined cycle). Each step is implemented by software processing by the vehicle management server 3 (application server 31), but may be implemented by hardware (electric circuit) located in the vehicle management server 3. The term "step" is hereinafter abbreviated as "S."

In S11, the vehicle management server 3 acquires the VPP data (location information and SOC information) from the vehicle 1. The vehicle 1 transmits the VPP data to the vehicle 1 at the frequency of communication set in advance. The frequency of communication set in advance may be a predetermined initial value of the frequency of communication, or may be a value set as a result of the previous series of steps. Although not shown in the figure, the vehicle management server 3 separately acquires the day of the week, the weather in the area around the vehicle 1, etc.

In S12, the vehicle management server 3 determines whether the vehicle 1 satisfies a VPP participation condition. More specifically, the vehicle management server 3 can determine that the vehicle 1 satisfies the VPP participation condition when a contract in which the vehicle 1 participates in the VPP has been concluded in advance. Information on this contract is stored in the vehicle database 321 (see FIG. 2). The vehicle management server 3 can also determine that the vehicle 1 satisfies the VPP participation condition when the user of the vehicle 1 has performed to the user terminal 2 a predetermined operation for the vehicle 1 to participate in the VPP (e.g., an operation to allow the vehicle 1 to participate in the VPP during a specific period or during a specific time period of the day). When the vehicle 1 satisfies the VPP participation condition (YES in S12), the routine proceeds to S13. When the vehicle 1 does not satisfy the VPP participation condition (NO in S12), the vehicle management server 3 ends the process without performing the subsequent steps.

In S13, the vehicle management server 3 determines whether the vehicle 1 has started traveling toward the destination point or whether the vehicle 1 is traveling toward the destination point, based on the location information of the vehicle 1. When the vehicle 1 has started traveling toward the destination point or is traveling toward the destination point (YES in S13), the routine proceeds to S14. The subsequent steps will not be performed before departure of the vehicle 1 (NO in S13). When the vehicle 1 arrives at the destination point, the vehicle management server 3 determines NO in S13.

In S14, the vehicle management server 3 predicts the arrival time of the vehicle 1 at the destination point (e.g., arrival time at home) from the location information of the vehicle 1, day of the week, weather, etc. by using the time prediction model 5 (see FIG. 3) corresponding to the vehicle 1.

In S15, the vehicle management server 3 predicts the SOC of the battery 13 of the vehicle 1 at the predicted arrival time. The vehicle management server 3 can calculate the amount of power (Wh) that will be used by the vehicle 1 to reach the destination point, based on the distance (km) of a predicted travel route of the vehicle 1 and the electricity economy (km/kWh or Wh/km) of the vehicle 1. Therefore, the vehicle management server 3 can predict the SOC at the arrival time from the current SOC and the amount of power that will be used by the vehicle 1 to reach the destination point.

The vehicle management server 3 transmits the predicted arrival time and the predicted SOC of the battery 13 at the predicted arrival time to the VPP server 4. The VPP server 4 uses the predicted arrival time of the vehicle 1 and the predicted SOC to develop a VPP plan.

In S16, the vehicle management server 3 calculates the confidence of the predicted arrival time obtained in S14. As described in detail above with reference to FIGS. 4 and 5, the vehicle management server 3 can calculate the confidence based on the width or height of the probability distribution of the predicted arrival time.

In S17, the vehicle management server 3 sets the frequency of communication of the VPP data with the vehicle 1 according to the confidence of the predicted arrival time. The vehicle management server 3 can set the frequency of communication from the confidence by using, for example, the maps of FIGS. 9 to 11 defining the relationship between the confidence and the frequency of communication. The vehicle management server 3 may use a data table, a function, a relational expression, etc. instead of the maps.

The vehicle management server 3 switches the timing to request the VPP data from the vehicle 1 at the set frequency of communication. That is, when the frequency of communication changes, the vehicle management server 3 changes the time interval to request the VPP data from the vehicle 1 (or the number of times the vehicle management server 3 requests the VPP data from the vehicle 1 until the vehicle 1 reaches the destination point). The vehicle 1 transmits the VPP data to the vehicle management server 3 in response to the request from the vehicle management server 3.

Alternatively, the vehicle management server 3 may transmit the set frequency of communication to the vehicle 1. The vehicle 1 may voluntarily transmit the VPP data to the vehicle management server 3 at the frequency of communication, instead of every time the vehicle 1 receives a request from the vehicle management server 3.

As described above, in the present embodiment, when the vehicle 1 is not home etc. and is not connected to the power grid, the vehicle management server 3 predicts the arrival time at home when the vehicle 1 becomes connectable to the power grid. The time prediction model 5 that probabilistically calculates the arrival time at home is used to predict the arrival time at home. The arrival time at home predicted using the time prediction model 5 is expressed as a probability distribution. The vehicle management server 3 calculates the confidence of the arrival time at home to be higher as the width of the probability distribution of the arrival time at home is narrower (as the height of the probability distribution is greater). The vehicle management server 3 sets the frequency of communication of the VPP data according to the confidence of the arrival time at home. For example, the vehicle management server 3 sets the frequency of communication of the VPP data to a lower value as the confidence of the arrival time at home is higher. This is because when the confidence of the arrival time at home is high, the arrival time at home can be accurately predicted without acquiring the VPP data frequently. Therefore, according to the present embodiment, the communication costs required for communication of the VPP data can be reduced.

### Modifications

An example in which the vehicle management server 3 performs all the steps is described in the embodiment (see FIG. 12). However, the vehicle 1 may perform a part of the steps.

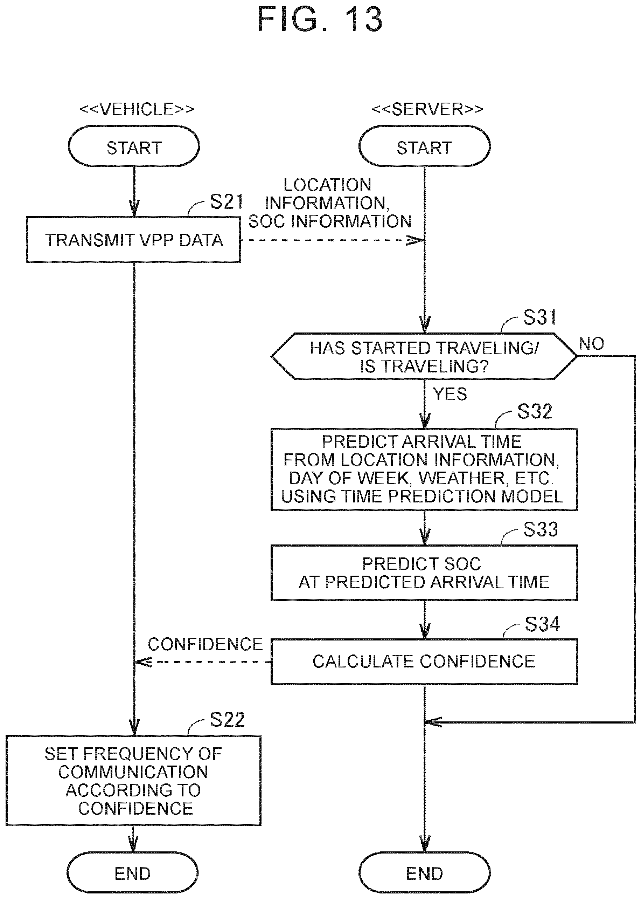

FIG. 13 is a flowchart of a process that is performed in the vehicle management system 100 according to a modification of the embodiment. A process that is performed by the vehicle 1 is shown on the left side of the figure, and a process that is performed by the vehicle management server 3 is shown on the right side of the figure.

In S21, the vehicle 1 transmits the VPP data including location information and SOC information to the vehicle management server 3.

In S31, the vehicle management server 3 determines whether the vehicle 1 has started traveling toward the destination point or is traveling toward the destination point. When the vehicle 1 has started traveling toward the destination point or is traveling toward the destination point (YES in S31), the vehicle management server 3 performs S32 to S34. S32 to S34 correspond to S14 to S16 in the embodiment. The vehicle management server 3 transmits the confidence calculated in S34 to the vehicle 1.

The vehicle 1 sets the frequency of communication of the VPP data to the vehicle management server 3 according to the confidence received from the vehicle management server 3 (S22). From then on, the vehicle 1 can voluntarily transmit the VPP data to the vehicle management server 3 at the frequency of communication set by the vehicle 1 itself.

As described above, the vehicle 1 and the vehicle management server 3 may cooperatively perform the series of steps. According to this modification as well, as in the embodiment, the communication costs required for communication of the VPP data can be reduced.

The embodiment disclosed herein should be considered to be illustrative and not restrictive in all respects. The scope of the present disclosure is shown by the claims rather than by the above description of the embodiment, and is intended to include all modifications within the meaning and scope equivalent to the claims.

## Claims

1. A server (3) that manages a plurality of vehicles (1), each of the vehicles being configured to perform either or both of charging and discharging from and to a power grid when electrically connected to the power grid, the server comprising:
a communication device (33) that acquires data including location information of a target vehicle through communication, the target vehicle being a vehicle not connected to the power grid out of the vehicles (1); and
a processor (311) that sets a frequency of communication at which the data is acquired from the target vehicle, wherein
the processor (311) acquires the data from the target vehicle,
the processor (311) predicts connection time from the acquired data according to a prediction model (5) and calculates confidence of the predicted connection time, the connection time being time when the target vehicle becomes connectable to the power grid, and the prediction model (5) being a model that predicts the connection time based on the data from the target vehicle, and
**characterised in that**
the processor (311) sets the frequency of communication according to the confidence

2. The server (3) according to claim 1, wherein the processor (311) switches the frequency of communication according to the confidence until the target vehicle is connected to the power grid.

3. The server (3) according to claim 1 or 2, wherein:
the prediction model (5) is a probability model (51) that probabilistically predicts the connection time based on a learning result of a driving history of the target vehicle; and
the processor (311) calculates the confidence to be lower as a width of a probability distribution of the connection time predicted using the prediction model (5) is greater.

4. The server (3) according to any one of claims 1 to 3, wherein the processor (311) sets the frequency of communication to a lower value as the confidence is higher.

5. The server (3) according to any one of claims 1 to 3, wherein the processor (311) sets the frequency of communication to a lower value when the confidence is lower than a first predetermined value than when the confidence is higher than the first predetermined value.

6. The server (3) according to any one of claims 1 to 3, wherein the processor (311) sets the frequency of communication to a same value as when the confidence is equal to a first predetermined value, when the confidence is lower than the first predetermined value.

7. The server (3) according to claim 5 or 6, wherein the processor (311) sets the frequency of communication to a lower value when the confidence is higher than a second predetermined value that is higher than the first predetermined value than when the confidence is lower than the second predetermined value.

8. The server (3) according to any one of claims 1 to 7, wherein the data includes at least one of the following in addition to the location information: day of week, weather information, and traffic congestion information.

9. A vehicle (1) comprising:
a communication device (31) that transmits data including location information of the vehicle (1) to a server (3) according to any one of claims 1 to 8; and
a control device that controls the communication device, wherein
the vehicle (1) is configured to perform either or both of charging and discharging from and to a power grid when electrically connected to the power grid,
the control device acquires confidence of connection time when the vehicle is not connected to the power grid, the connection time being time when the vehicle (1) is predicted to become connectable to the power grid, and
the control device sets a frequency of communication at which the data is transmitted to the server (3), according to the confidence.

10. A communication control method for controlling communication between a plurality of vehicles (1) according to claim 9 and a server (3) according to anyone of claims 1 to 8,
each of the vehicles being configured to perform either or both of charging and discharging from and to a power grid when electrically connected to the power grid, and
the server (3) including a prediction model (5), the prediction model (5) being a model that predicts connection time based on data including location information of a target vehicle of the vehicles when the target vehicle is not connected to the power grid, and the connection time being time when the target vehicle become connectable to the power grid,
the communication control method comprising:
acquiring the data from the target vehicle by the server (3);
predicting the connection time from the data according to the prediction model (5) and calculating confidence of the predicted connection time by the server (3); and
**characterised by** the further step of setting by the server (3) a frequency of communication at which the data is acquired, according to the confidence.

11. The communication control method according to claim 10, wherein the server (3) switches the frequency of communication according to the confidence until the target vehicle is connected to the power grid.

12. The communication control method according to claim 10 or 11, wherein:
the prediction model (5) is a probability model (51) that probabilistically predicts the connection time based on a learning result of a driving history of the target vehicle; and
the server (3) calculates the confidence to be lower as a width of a probability distribution of the connection time predicted using the prediction model (5) is greater.

13. The communication control method according to claim 10, wherein the server (3) sets the frequency of communication to a lower value when the confidence is lower than a first predetermined value than when the confidence is higher than the first predetermined value.

14. The communication control method according to claim 13, wherein the server (3) sets the frequency of communication to a lower value when the confidence is higher than a second predetermined value that is higher than the first predetermined value than when the confidence is lower than the second predetermined value.

15. The communication control method according to any one of claims 10 to 14, wherein the data includes at least one of the following in addition to the location information: day of week, weather information, and traffic congestion information.

## Patentansprüche

1. Server (3), der mehrere Fahrzeuge (1) managt, wobei jedes der Fahrzeuge konfiguriert ist, entweder ein Laden von einem Stromnetz oder ein Entladen in ein Stromnetz oder beides auszuführen, wenn es mit dem Stromnetz elektrisch verbunden ist, wobei der Server Folgendes umfasst:
eine Kommunikationsvorrichtung (33), die Daten, die Ortsinformationen eines Zielfahrzeugs enthalten, durch Kommunikation erfasst, wobei das Zielfahrzeug eines der Fahrzeuge (1) ist, das nicht mit dem Stromnetz verbunden ist; und
einen Prozessor (311), der eine Kommunikationsfrequenz einstellt, mit der die Daten von dem Zielfahrzeug erfasst werden, wobei
der Prozessor (311) die Daten von dem Zielfahrzeug erfasst,
der Prozessor (311) die Verbindungszeit aus den erfassten Daten gemäß einem Vorhersagemodell (5) vorhersagt und das Vertrauen in die vorhergesagte Verbindungszeit berechnet, wobei die Verbindungszeit eine Zeit ist, für die das Zielfahrzeug mit dem Stromnetz verbunden werden kann, und das Vorhersagemodell (5) ein Modell ist, das die Verbindungszeit anhand der Daten von dem Zielfahrzeug vorhersagt,
**dadurch gekennzeichnet, dass** der Prozessor (311) die Kommunikationsfrequenz gemäß dem Vertrauen einstellt.

2. Server (3) nach Anspruch 1, wobei der Prozessor (311) die Kommunikationsfrequenz gemäß dem Vertrauen wechselt, bis das Zielfahrzeug mit dem Stromnetz verbunden ist.

3. Server (3) nach Anspruch 1 oder 2, wobei:
das Vorhersagemodell (5) ein Wahrscheinlichkeitsmodell (51) ist, das die Verbindungszeit anhand eines Lernergebnisses einer Fahrgeschichte des Zielfahrzeugs probabilistisch vorhersagt; und
der Prozessor (311) berechnet, dass das Vertrauen niedriger ist, wenn eine Breite der Wahrscheinlichkeitsverteilung der unter Verwendung des Vorhersagemodells (5) vorhergesagten Verbindungszeit größer ist.

4. Server (3) nach einem der Ansprüche 1 bis 3, wobei der Prozessor (311) die Kommunikationsfrequenz auf einen niedrigeren Wert einstellt, wenn das Vertrauen größer ist.

5. Server (3) nach einem der Ansprüche 1 bis 3, wobei der Prozessor (311) die Kommunikationsfrequenz dann, wenn das Vertrauen niedriger als ein erster vorgegebener Wert ist, auf einen niedrigeren Wert einstellt als dann, wenn das Vertrauen höher als der erste vorgegebene Wert ist.

6. Server (3) nach einem der Ansprüche 1 bis 3, wobei der Prozessor (311) die Kommunikationsfrequenz auf denselben Wert einstellt wie dann, wenn das Vertrauen gleich einem ersten vorgegebenen Wert ist, wenn das Vertrauen niedriger als der erste vorgegebene Wert ist.

7. Server (3) nach Anspruch 5 oder 6, wobei der Prozessor (311) die Kommunikationsfrequenz dann, wenn das Vertrauen größer als ein zweiter vorgegebener Wert ist, der größer als der erste vorgegebene Wert ist, auf einen niedrigeren Wert einstellt als dann, wenn das Vertrauen niedriger als der zweite vorgegebene Wert ist.

8. Server (3) nach einem der Ansprüche 1 bis 7, wobei die Daten zusätzlich zu den Ortsinformationen mindestens eines des Folgenden enthalten: einen Wochentag, Wetterinformationen und Verkehrsstauinformationen.

9. Fahrzeug (1), das Folgendes umfasst:
eine Kommunikationsvorrichtung (31), die Daten, die Ortsinformationen des Fahrzeugs (1) enthalten, an einen Server (3) nach einem der Ansprüche 1 bis 8 sendet; und eine Steuervorrichtung, die die Kommunikationsvorrichtung steuert, wobei
das Fahrzeug (1) konfiguriert ist, entweder ein Laden von einem Stromnetz oder ein Entladen in ein Stromnetz oder beides auszuführen, wenn es mit dem Stromnetz elektrisch verbunden ist,
die Steuervorrichtung ein Vertrauen in eine Verbindungszeit erfasst, wenn das Fahrzeug nicht mit dem Stromnetz verbunden ist, wobei die Verbindungszeit die Zeit ist, für die vorhergesagt wird, dass das Fahrzeug (1) mit dem Stromnetz verbunden werden kann, und
die Steuervorrichtung eine Kommunikationsfrequenz, mit der die Daten an den Server (3) geendet werden, gemäß dem Vertrauen einstellt.

10. Kommunikationssteuerverfahren zum Steuern einer Kommunikation zwischen mehreren Fahrzeugen (1) nach Anspruch 9 und einem Server (3) nach einem der Ansprüche 1 bis 8,
wobei jedes der Fahrzeuge konfiguriert ist, entweder ein Laden von einem Stromnetz oder ein Entladen in ein Stromnetz oder beides auszuführen, wenn es mit dem Stromnetz elektrisch verbunden ist, und
der Server (3) ein Vorhersagemodell (5) enthält, wobei das Vorhersagemodell (5) ein Modell ist, das die Verbindungszeit anhand von Daten, die Ortsinformationen eines Zielfahrzeugs der Fahrzeuge enthalten, vorhersagt, wenn das Zielfahrzeug nicht mit dem Stromnetz verbunden ist, und die Verbindungszeit eine Zeit ist, für die das Zielfahrzeug mit dem Stromnetz verbunden werden kann,
wobei das Kommunikationssteuerverfahren Folgendes umfasst:
Erfassen der Daten von dem Zielfahrzeug durch den Server (3) ;
Vorhersagen der Verbindungszeit aus den Daten gemäß dem Vorhersagemodell (5) und Berechnen des Vertrauens in die vorhergesagte Verbindungszeit durch den Server (5); und **gekennzeichnet durch** den weiteren Schritt des Einstellens durch den Server (3) einer Kommunikationsfrequenz, mit der die Daten erfasst werden, gemäß dem Vertrauen.

11. Kommunikationssteuerverfahren nach Anspruch 10, wobei der Server (3) die Kommunikationsfrequenz gemäß dem Vertrauen wechselt, bis das Zielfahrzeug mit dem Stromnetz verbunden ist.

12. Kommunikationssteuerverfahren nach Anspruch 10 oder 11, wobei:
das Vorhersagemodell (5) ein Wahrscheinlichkeitsmodell (51) ist, das die Verbindungszeit anhand eines Lernergebnisses einer Fahrgeschichte des Zielfahrzeugs probabilistisch vorhersagt; und
der Server (3) berechnet, dass das Vertrauen niedriger ist, wenn eine Breite einer Wahrscheinlichkeitsverteilung der unter Verwendung des Vorhersagemodells (5) vorhergesagten Verbindungszeit größer ist.

13. Kommunikationssteuerverfahren nach Anspruch 10, wobei der Server (3) die Kommunikationsfrequenz dann, wenn das Vertrauen niedriger als ein erster vorgegebener Wert ist, auf einen niedrigeren Wert einstellt als dann, wenn das Vertrauen größer als der erste vorgegebene Wert ist.

14. Kommunikationssteuerverfahren nach Anspruch 13, wobei der Server (3) die Kommunikationsfrequenz dann, wenn das Vertrauen größer als ein zweiter vorgegebener Wert ist, der größer als der erste vorgegebene Wert ist, auf einen niedrigeren Wert einstellt als dann, wenn das Vertrauen niedriger als der zweite vorgegebene Wert ist.

15. Kommunikationssteuerverfahren nach einem der Ansprüche 10 bis 14, wobei die Daten zusätzlich zu den Ortsinformationen mindestens eines des Folgenden enthalten: einen Wochentag, Wetterinformationen und Verkehrsstauinformationen.

## Revendications

1. Serveur (3) qui gère une pluralité de véhicules (1), chacun des véhicules étant configuré pour effectuer une charge et/ou une décharge à partir et vers un réseau électrique lorsqu'il est connecté électriquement au réseau électrique, le serveur comprenant :
un dispositif de communication (33) qui obtient, par une communication des données, comportant des informations de localisation d'un véhicule cible, le véhicule cible étant un véhicule parmi les véhicules (1) qui n'est pas connecté au réseau électrique ; et
un processeur (311) qui fixe une fréquence de communication à laquelle les données sont obtenues auprès du véhicule cible,
le processeur (311) obtenant les données auprès du véhicule cible,
le processeur (311) prédisant le moment de connexion à partir des données obtenues selon un modèle de prédiction (5) et calculant un niveau de confiance du moment de connexion prédit, le moment de connexion étant le moment où le véhicule cible sera capable de se connecter au réseau électrique, et le modèle de prédiction (5) étant un modèle qui prédit le moment de connexion sur la base des données provenant du véhicule cible, et
**caractérisé en ce que** le processeur (311) fixe la fréquence de communication selon le niveau de confiance.

2. Serveur (3) selon la revendication 1, le processeur (311) modifiant la fréquence de communication selon le niveau de confiance jusqu'à ce que le véhicule cible soit connecté au réseau électrique.

3. Serveur (3) selon la revendication 1 ou 2,
le modèle de prédiction (5) étant un modèle de probabilité (51) qui prédit de manière probabiliste le moment de connexion sur la base d'un résultat d'apprentissage d'un historique de conduite du véhicule cible ; et
le processeur (311) calculant le niveau de confiance de sorte que, plus la largeur d'une distribution des probabilités du moment de connexion prédit à l'aide du modèle de prédiction (5) est grande, plus le niveau de confiance est faible.

4. Serveur (3) selon l'une quelconque des revendications 1 à 3, le processeur (311) fixant la fréquence de communication de sorte que, plus le niveau de confiance est élevé, plus la fréquence de communication est faible.

5. Serveur (3) selon l'une quelconque des revendications 1 à 3, le processeur (311) fixant la fréquence de communication à une valeur plus faible lorsque le niveau de confiance est inférieur à une première valeur prédéterminée que lorsque le niveau de confiance est supérieur à la première valeur prédéterminée.

6. Serveur (3) selon l'une quelconque des revendications 1 à 3, le processeur (311) fixant la fréquence de communication à la même valeur que lorsque le niveau de confiance est égal à une première valeur prédéterminée, lorsque le niveau de confiance est inférieur à la première valeur prédéterminée.

7. Serveur (3) selon la revendication 5 ou 6, le processeur (311) fixant la fréquence de communication à une valeur plus faible lorsque le niveau de confiance est supérieur à une deuxième valeur prédéterminée supérieure à la première valeur prédéterminée que lorsque le niveau de confiance est inférieur à la deuxième valeur prédéterminée.

8. Serveur (3) selon l'une quelconque des revendications 1 à 7, les données comportant, outre les informations de localisation : le jour de la semaine et/ou des informations météorologiques et/ou des informations sur les embouteillages.

9. Véhicule (1), comprenant :
un dispositif de communication (31) qui transmet des données comportant des informations de localisation du véhicule (1) à un serveur (3) selon l'une quelconque des revendications 1 à 8 ; et
un dispositif de commande qui commande le dispositif de communication,
le véhicule (1) étant configuré pour effectuer une charge et/ou une décharge à partir et vers un réseau électrique lorsqu'il est connecté électriquement au réseau électrique,
le dispositif de commande obtenant un niveau de confiance du moment de connexion lorsque le véhicule n'est pas connecté au réseau électrique, le moment de connexion étant le moment où il est prédit que le véhicule (1) sera capable de se connecter au réseau électrique, et
le dispositif de commande fixant une fréquence de communication à laquelle les données sont transmises au serveur (3), selon le niveau de confiance.

10. Procédé de commande de communication permettant de commander une communication entre une pluralité de véhicules (1) selon la revendication 9 et un serveur (3) selon l'une quelconque des revendications 1 à 8,
chacun des véhicules étant configuré pour effectuer une charge et/ou une décharge à partir et vers un réseau électrique lorsqu'il est connecté électriquement au réseau électrique, et
le serveur (3) comportant un modèle de prédiction (5), le modèle de prédiction (5) étant un modèle qui prédit le moment de connexion sur la base de données comportant des informations de localisation d'un véhicule cible parmi les véhicules lorsque le véhicule cible n'est pas connecté au réseau électrique, et le moment de connexion étant le moment où le véhicule cible sera capable de se connecter au réseau électrique,
le procédé de commande de communication comprenant les étapes suivantes :
obtention des données auprès du véhicule cible par le serveur (3) ;
prédiction du moment de connexion à partir des données selon le modèle de prédiction (5) et calcul d'un niveau de confiance du moment de connexion prédit par le serveur (3) ; et
**caractérisé par** l'étape supplémentaire de fixation, par le serveur (3), d'une fréquence de communication à laquelle les données sont obtenues, selon le niveau de confiance.

11. Procédé de commande de communication selon la revendication 10, le serveur (3) modifiant la fréquence de communication selon le niveau de confiance jusqu'à ce que le véhicule cible soit connecté au réseau électrique.

12. Procédé de commande de communication selon la revendication 10 ou 11,
le modèle de prédiction (5) étant un modèle de probabilité (51) qui prédit de manière probabiliste le moment de connexion sur la base d'un résultat d'apprentissage d'un historique de conduite du véhicule cible ; et
le serveur (3) calculant le niveau de confiance de sorte que, plus la largeur d'une distribution des probabilités du moment de connexion prédit à l'aide du modèle de prédiction (5) est grande, plus le niveau de confiance est faible.

13. Procédé de commande de communication selon la revendication 10, le serveur (3) fixant la fréquence de communication à une valeur plus faible lorsque le niveau de confiance est inférieur à une première valeur prédéterminé que lorsque le niveau de confiance est supérieur à la première valeur prédéterminée.

14. Procédé de commande de communication selon la revendication 13, le serveur (3) fixant la fréquence de communication à une valeur plus faible lorsque le niveau de confiance est supérieur à une deuxième valeur prédéterminée supérieure à la première valeur prédéterminée que lorsque le niveau de confiance est inférieur à la deuxième valeur prédéterminée.

15. Procédé de commande de communication selon l'une quelconque des revendications 10 à 14, les données comportant, outre les informations de localisation : le jour de la semaine et/ou des informations météorologiques et/ou des informations sur les embouteillages.
